Europäisches Patentamt

European Patent Office

Office européen des brevets

(19)

(11) Publication number: **0 111 059**
**A2**

(12) **EUROPEAN PATENT APPLICATION**

(21) Application number: **83108715.0**

(22) Date of filing: **05.09.83**

(51) Int. Cl.³: **G 01 F 1/56**
**B 24 C 1/00**

(30) Priority: **08.11.82 US 439917**

(43) Date of publication of application:
**20.06.84 Bulletin 84/25**

(84) Designated Contracting States:
**DE FR GB IT SE**

(71) Applicant: **METAL IMPROVEMENT COMPANY INC.**
**10 Forest Avenue**
**Paramus New Jersey 07652(US)**

(72) Inventor: **Biehle, William Charles**
**7075 Petri Drive**
**Cincinnati Ohio 45230(US)**

(74) Representative: **Engelhardt, Guido, Dipl.-Ing.**
**Montafonstrasse 35 Postfach 1350**
**D-7990 Friedrichshafen 1(DE)**

(54) Method and apparatus for measuring flow-rate of electromagnetic granular media.

(57) A method and apparatus for measuring the flow-rate of ferromagnetic granular media in a gravity-fed peening apparatus by passing the media in the supply line at substantially constant head pressure through an inductive transducer, wherein the current drawn by the induction coil varies in accordance with changes in the flow-rate.

*FIG.1*

EP 0 111 059 A2

Croydon Printing Company Ltd.

1

# METHOD AND APPARATUS FOR MEASURING FLOW-RATE OF ELECTROMAGNETIC GRANULAR MEDIA

## TECHNICAL FIELD

This invention relates to an improved metering device and method of measuring the flow-rate of metallic granular media, and more particularly to the flow of such media in shot-peening equipment.

## BACKGROUND ART

In prior practice, the flow of this material has commonly been measured by such means as weighing the amount of material delivered during a given period of operation of the peening equipment. This produces only an approximate result, since in a gravity fed device the flow may vary with the amount of head of the supply, and may also vary with variations in the air pressure at the delivery nozzle.

Another method of determining flow has been the use of valving means operable at different rates in the supply line, such as a cylindrical rotary valve having transverse bores in intermittent communication with the supply and delivery ports. Such a method is limited by the speed at which the valve can be rotated and by the number of transverse bores which can be provided. The device is also expensive to fabricate, owing to the necessity of precision machining.

It is the purpose of this invention to overcome such drawbacks by means providing a substantially constant flow-rate, and electrical means for reading the rate of continuous flow.

## SUMMARY

In the currently developing use of shot-peening to increase fatigue life, to increase resist-

2

ance to stress corrosion, and for shaping metal parts to critical dimensions, it is desirable to have continuous indication during operation of the flow-rate of the peening media, in order that all portions of the work object may be subjected to equal treatment.

This invention provides a measuring system and equipment for constant determination of the rate of flow of granular ferromagnetic material, such as steel shot, primarily in a low-velocity peening system with packed transfer lines. The peening unit has a continuous supply of media, gravity-fed from a hopper, which media pass through a filtering element to control head pressure, and subsequently through a cylindrical element surrounded by a transducer coil connected to a suitable current supply and to a suitable electrical readout system, whereby the flow-rate can be read on a graph plotted with the weight of shot passing through the system during any desired increment of time at the signal level produced by the system. If desired, the system may be adapted by data logger or micro processor to read directly in pounds or kilograms per minute.

It is, therefore, an object of the invention to provide an improved method of determining the flow-rate of granular ferromagnetic material.

Another object is to provide a device for controlling head pressure from the hopper.

It is another object to provide an improved metering device for measuring continuous flow of ferromagnetic particles.

A further object of the invention is to provide a system for reading the flow-rate of ferromagnetic particles during operation of a shot-peening equipment.

3

Other objects and advantages will become apparent on reading the following description in connection with the accompanying drawings.

BRIEF DESCRIPTION OF THE DRAWINGS

Fig. 1 is a block representation of the peening system of the invention with the associated electrical equipment;

Fig. 2 is a sectional elevation of the head pressure filter which is positioned below the hopper;

Fig. 3 is a sectional elevation on a transducer flow-meter which is positioned below the filter; and

Fig. 4 is an elevation of the transducer with associated electrical equipment.

DESCRIPTION OF THE PREFERRED EMBODIMENT

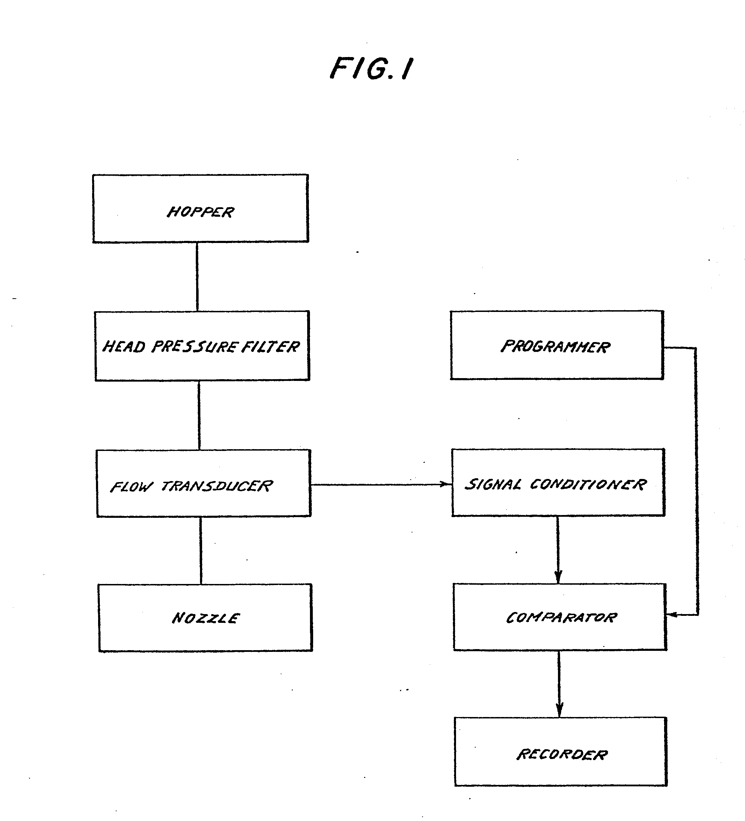

In Fig. 1 there is shown a block representation of a shot-peening apparatus constructed according to the invention, a hopper, pot or other suitable reservoir means serves as a source of supply of ferromagnetic granular media, the hopper being constantly replenished by media which have passed through the system and are returned by any convenient means, such as a conveyor belt, for example (not shown).

The granular media, in this case steel shot of suitable size selected for the operation to be performed, pass downward by gravity through a head pressure filter which compensstes for varying head in the hopper. The shot discharges downward from the filter into an inductive flow-rate transducer which meters the rate of flow passing to the discharge nozzle and impinging on the workpiece. An electrical signal is transmitted by the transducer to a signal conditioner and ultimately to a recorder on which the signal level may be read, and then

4

referred to the chart on which the corresponding flow-rate is plotted.

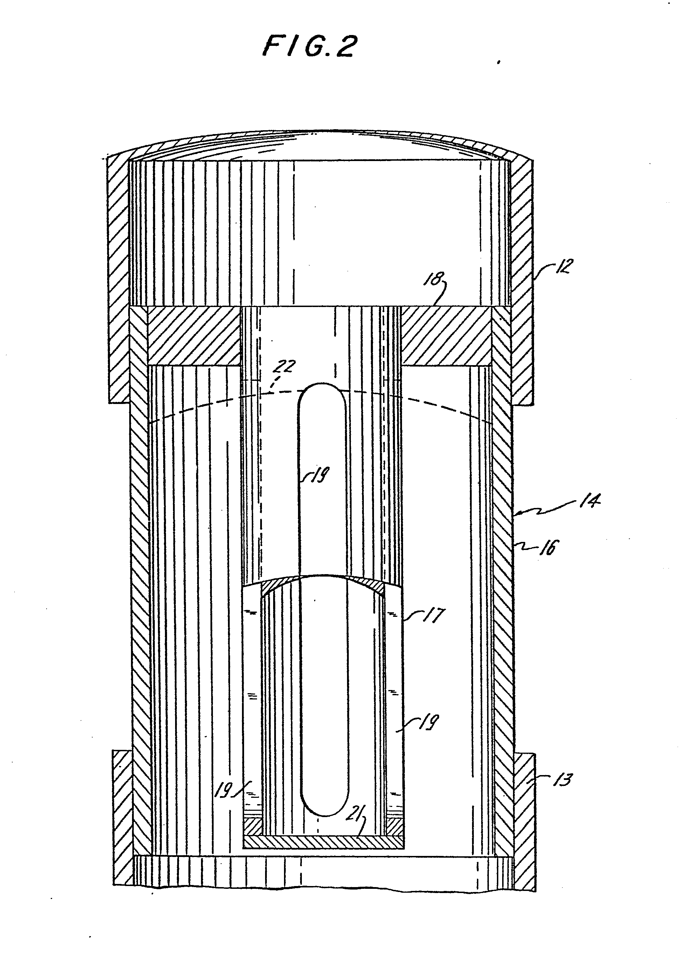

Fig. 2 shows the head pressure filter 14 in cross section. A tube or sleeve 12 connects the hopper (not shown) to the filter and serves as a transfer line to feed the granular media to the filter. A second tube 13 extends downward from the filter and passes the media to the transducer which serves as a metering device. All tubes and partitions in this embodiment were formed of polyvinyl chloride plastic, cemented together to form a continuous passage or transfer line, but other substances will serve.

The filter 14 comprises a chamber formed of an outer tube 16 with a smaller concentrically disposed inner tube 17, the upper end of tube 16 having a closure plate 18 with an axial bore therethrough in which the inner tube 17 is mounted and provides communication with the interior of sleeve 12. The wall of the central tube 17 has a plurality of vertical slots 19 therethrough for the passage of shot, the head pressure being rendered substantially constant by the controlling slots 19. As shown, there are four such slots disposed 90° apart, but a greater or lesser number symmetrically disposed are serviceable. The bottom end of tube 17 is provided with a closure 21 so that shot entering the open top end must discharge transversely through the slots into the annular chamber surrounding tube 17. The dotted line 22 shows approximately the level to which the filter would be filled with shot. It has been found convenient to use an outer tube having twice the inner diameter of that of the inner tube, but this is not a critical ratio. Shot from the annular chamber passes on into the transfer line through the open lower end of tube 16.

5

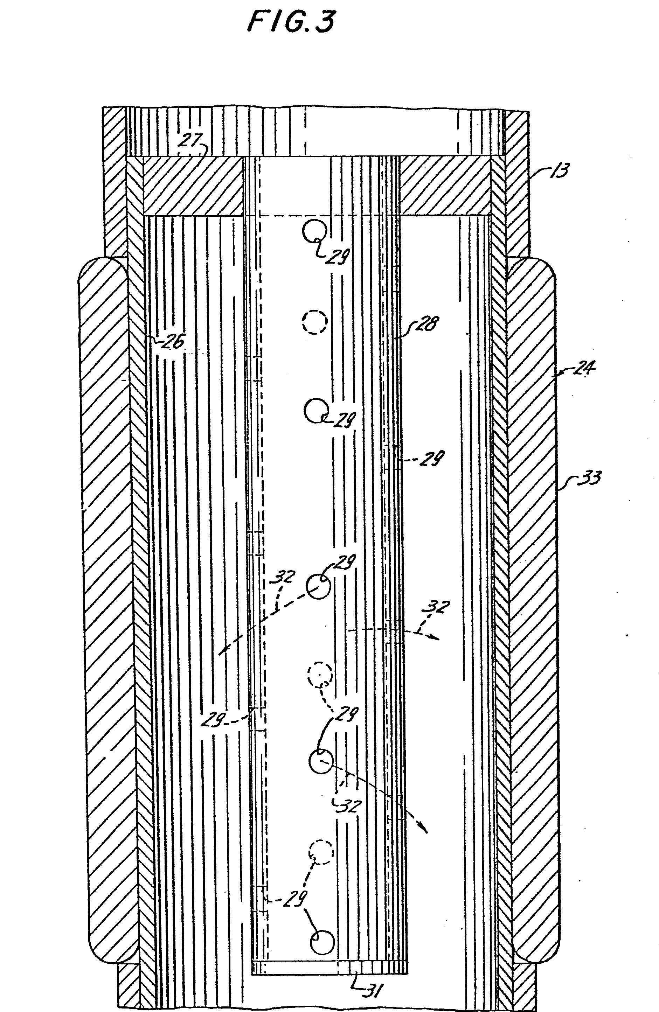

In Fig. 3 there is shown the metering device
24, disposed a short distance downstream from the head
pressure filter and in communication therewith through
sleeve 13. In general form, the meter 24 is similar to the
the filter but is of different function. It comprises an
outer tube 26 having at its top end a closure 27 having an
axial bore therethrough, with an inner tube 28 mounted
therein and communicating with the filter through sleeve
13.

Tube 28 has a plurality of bores 29 through the
wall, disposed in four vertical rows 90° apart and providing communication between the interior of tube 28 and the
annular chamber surrounding it. A closure 31 is provided
at the downstream end of tube 28, so that media entering
the top end discharge transversely through bores 29, as
indicated by the dotted arrows 32. The bores are staggered so that no two bores are in the same transverse
plane, to provide substantially uniform shot-flow into
the annular chamber between the two tubes, and the
diameter of the bores is chosen appropriately for the
size of shot to be used. In the embodiment shown,
the shot used was of .011" diameter and the bores of
11/32" diameter, but this is not a fixed ratio. Appropriate proportions would be chosen from such considerations as maximum flow rate desired, overall physical size
of the equipment, and the degree of resolution desired.

As in the case of the filter, a convenient
proportion for the tubes of the transducer is an outer
tube 26 having an inner diameter twice the inner diameter
of tube 28.

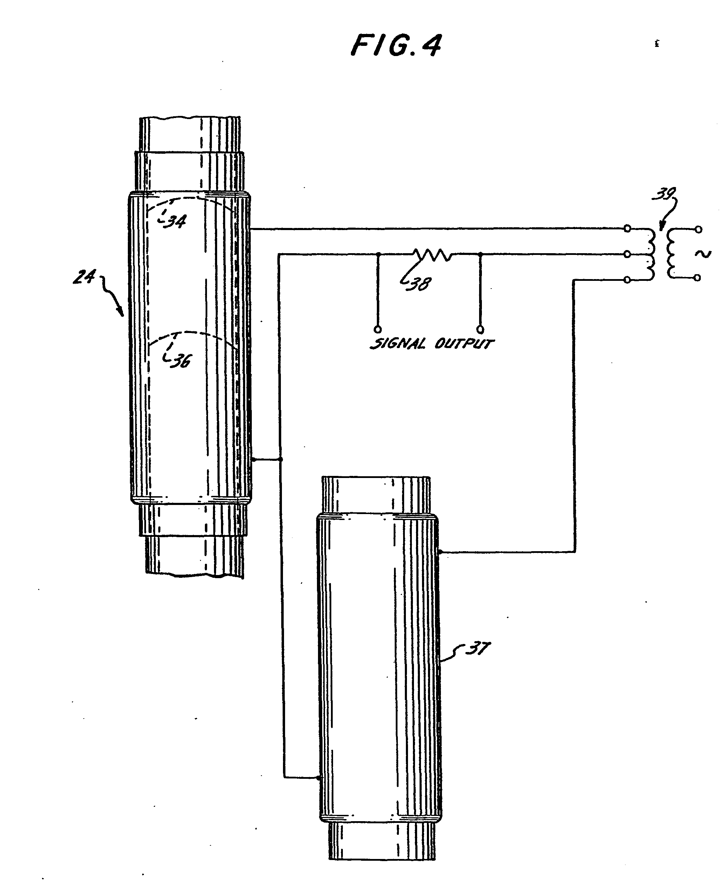

An induction coil 33 surrounds the outer tube
26 of the flow meter and is provided with current as
shown schematically in Fig. 4. A range of 1 to 10 volts
volts at 60hz is a suitable operating voltage, with 3
to 4 volts being preferred. There is no appreciable

6

magnetic effect on the shot up to about 8 volts.

With appropriate electrical equipment much higher frequencies may be used, from 1 to 100Khz, which allows low current.

When the transducer is in a static condition, as at startup, it will be practically full of shot, as indicated by the dotted line 34 in Fig. 4. As an example, in the full condition the coil 33 of meter·24 may draw approximately 100 milliamperes at 4 volts at 60 cycles. As the shot loading drops, the current drawn increases proportionately, to the normal working shot-level indicated generally by the dotted line 36 of Fig. 4. With no shot in the system, full saturation is reached and the current drawn may be as high as 200 milliamperes or more. It is to be understood that this is an example only, depending on the characteristics of the coil used, and is not a limitation of the invention .

Fig. 4 also shows an option which may be used. In addition to the working coil 24 through which the shot passes to the nozzle, there may be provided a balancing coil 37 in the circuit which is of the same form and size as the working coil but which has closed ends and is filled with shot. The balancing coil, if used, will boost the usable signal; it creates a null effect in the static condition, resulting in a greater change of current drawn from the static to dynamic condition, when used with the center tap transformer 39. Such larger range of current permits more precise calibration of the signal output in relation to the flow rate.

The balancing coil 37 is a static coil as shown in Fig. 4, but a second coil 24 may be used dynamically in series with the first coil 24, receiving the shot from the first coil and passing it along the

7

supply line to the nozzle. However, the same result
may be achieved more simply by merely increasing the
length of the transducer coil.

The principle of operation of the flow-rate
transducer is that when the current drawn by the coil
is applied to the load resistor 38, Ohm's law, $E = I \times R$,
applies. R being a constant, as the current increases,
the voltage will increase proportionately. The signal
voltage across the resistor 38 provides a voltage signal
input to the signal conditioner (Fig. 1). The signal
output of the transducer thus produces a change related
to the change of level of shot as the flow-rate changes.
Hence, flow-rate may be read directly on the recorder.

8

CLAIMS

1. Gravity-fed peening apparatus comprising in combination:

(a) reservoir means supplying ferromagnetic granular media disposed at a suitable elevation to provide head pressure for the media;

(b) filter means disposed below and downstream from the reservoir and communicating therewith to receive the media therefrom and having means stabilizing the flow rate of the media to provide substantially constant head pressure below the filter means;

(c) metering means disposed below and downstream from the filter means and communicating therewith to receive the media from the filter and having electrical inductive means responsive to the level of media in the metering means and producing an electrical signal responsive to such level; and

(d) nozzle means disposed downstream from the metering means and receiving the media therefrom and discharging the media to a workpiece.

2. The combination recited in Claim 1, wherein the filter means comprises a vertically disposed outer tubular member closed at the upper end and open at the lower end, an inner tubular member coaxial therewith open at its upper end and closed at the lower end and defining an annular chamber with the outer tube, the inner tube receiving the media through the open upper end and having a plurality of apertures through the tubular wall stabilizing the flow of media therethrough into the annular chamber to provide substantially constant head pressure downstream therefrom.

9

3. The combination recited in claim 2, wherein the apertures stabilizing the flow of media are a plurality of equidistantly disposed vertical slots through the inner tube wall.

4. The combination recited in Claim 2, wherein the metering means comprises a vertically disposed outer tubular member closed at the upper end and open at the lower end, an inner tubular member coaxial therewith open at the upper end and closed at the lower end and defining an annular chamber with an outer tube, the inner tube receiving the media from the filter through the open upper end and having a plurality of apertures through the tubular wall restricting the flow of media therethrough into the annular chamber, a transfer line communicating with the lower end of the annular chamber and with a discharge nozzle disposed downstream therefrom, an electrical induction coil disposed around the exterior of the annular chamber and coaxial therewith, electrical supply means activating the induction coil, the activated coil being responsive to the level of media within the chamber of the metering means and providing an electrical signal varying in accordance with changes in the media level.

5. The combination recited in Claim 4, wherein the apertures through the inner tube wall are a plurality of circular bores  disposed in a plurality of vertical rows equidistantly spaced, the rows being vertically staggered in relation to each other so that no two bores are in the same transverse plane.

6. The combination recited in Claim 4, wherein the electrical current drawn by the induction

10

coil is at a minimum when the annular chamber is substantially full of ferromagnetic granular media, the
current rising in inverse proportion to a drop in the
level of the media in the chamber;

## FIG.1

```
┌─────────────────────┐              ┌─────────────────────┐
│       HOPPER        │              │     PROGRAMMER      │
└─────────────────────┘              └─────────────────────┘
          │                                     │
          │                                     │
┌─────────────────────┐              ┌─────────────────────┐
│ HEAD PRESSURE FILTER │              │                     │
└─────────────────────┘              └─────────────────────┘
          │                                     │
          │                                     │
┌─────────────────────┐     ┌──────►┌─────────────────────┐
│   FLOW TRANSDUCER   │─────┘       │  SIGNAL CONDITIONER  │
└─────────────────────┘              └─────────────────────┘
          │                                     │
          │                                     ▼
┌─────────────────────┐              ┌─────────────────────┐
│       NOZZLE        │              │     COMPARATOR      │◄──┐
└─────────────────────┘              └─────────────────────┘   │
                                                │              │
                                                ▼              │
                                     ┌─────────────────────┐   │
                                     │      RECORDER       │   │
                                     └─────────────────────┘   │
```

## FIG.2

FIG.3

# FIG.4

SIGNAL OUTPUT